# EUROPEAN PATENT SPECIFICATION

(11) **EP 3 309 000 B1**
(45) Date of publication and mention of the grant of the patent: **20.11.2019**
(21) Application number: 16193408.8
(22) Date of filing: 12.10.2016
(51) Int. Cl.: H01M 10/6568

(54) **AN ENERGY-STORAGE MODULE FOR A WORKING MACHINE**
ENERGIESPEICHERMODUL FÜR EINE ARBEITSMASCHINE
MODULE DE STOCKAGE D'ÉNERGIE POUR UN VEHICULE DE CHANTIER

(43) Date of publication of application: 18.04.2018
(73) Proprietor: Danfoss Mobile Electrification Oy, 53600 Lappeenranta (FI)
(72) Inventor: JÄRVELÄINEN, Tero, 53850 Lappeenranta (FI); PIISPANEN, Mikko, 53900 Lappeenranta (FI)
(74) Representative: Finnpatent Oy

(56) References cited:
- EP-A1- 2 952 377
- DE-A1-102009 000 066
- US-A1- 2009 075 162

## Description

### Field of the disclosure

The disclosure relates to an energy-storage module for storing electric energy and suitable for being an energy-storage or a basic construction unit of an energy-storage. The energy-storage module can be for example a capacitor module or a battery module. Furthermore, the disclosure relates to a working machine comprising an electromechanical power transmission chain.

### Background

Energy-storages, such as capacitors and batteries, for storing electric energy have many applications in electric systems. For example, an electromechanical power transmission chain between a combustion engine and one or more functional elements may comprise an energy-storage that is charged when the power of the one or more functional elements is less than the power of the combustion engine and discharged when the power of the one or more functional elements exceeds the power of the combustion engine. Therefore, the maximum power of the above-mentioned combustion engine can be less than when using e.g. a mechanical and/or hydraulic power transmission chain that does not comprise an energy-storage. The combustion engine can be e.g. a diesel engine, an Otto-cycle engine, or a turbine engine. Each functional element can be for example a wheel, a chain track, a hydraulic pump, or any other device driven by the electromechanical power transmission chain.

The above-mentioned energy-storage may comprise one or more electrically interconnected energy-storage modules each of which can be a capacitor module or a chargeable battery module. Each energy-storage module comprises typically a cooling structure for cooling energy-storage elements of the energy-storage module under consideration. The cooling structure comprises typically one or more heat-sink elements in heat conductive relations with the energy-storage elements. Each heat-sink element can be provided with cooling fins for conducting heat to the ambient air and/or with cooling ducts for conducting cooling fluid, e.g. water. A cooling arrangement of the kind described above is, however, not free from challenges. One of the challenges is related to cooling efficiency because there is a need to ensure that temperatures of also the hottest spots of the energy-storage elements are below a safety limit. See e.g. DE 10 2009 000066 A1.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new energy-storage module for storing electric energy and suitable for being an energy-storage or a basic construction unit of an energy-storage. The energy-storage module can be for example a capacitor module or a chargeable battery module.

An energy-storage module according to the invention comprises:
- one or more energy-storage elements for storing electric energy, and
- a container structure comprising a first section that contains the one or more energy-storage elements and liquid whose boiling point at the pressure of 100 kPa, i.e. 100 kN/m², is at most 120 degrees centigrade.

The container structure further comprises a second section for condensing a portion of the liquid vaporized by heat generated by the one or more energy-storage elements and for conducting the condensed liquid back to the first section. The energy-storage module comprises one or more cooling ducts for conducting cooling fluid, a first piping interface for receiving the cooling fluid from an external system, and a second piping interface for exhausting the cooling fluid back to the external system, wherein the second section comprises means to connect the first and second piping interfaces to the one or more cooling ducts. The energy-storage module comprises a cooler element inside the second section of the container structure and at least one of the cooling ducts is a tubular channel inside the cooler element, the cooler element being a separate piece of material with respect to walls of the container structure.

Therefore, the one or more energy-storage elements are cooled with two-phase evaporative cooling where the vaporization of the above-mentioned liquid absorbs heat from the one or more energy-storage elements and thereby improves the cooling efficiency.

In an energy-storage module according to an exemplifying and non-limiting embodiment of the invention, the first section of the container structure contains liquid whose boiling point at the pressure of 100 kPa is at most 100 degrees centigrade.

In an energy-storage module according to an exemplifying and non-limiting embodiment of the invention, the first section of the container structure contains liquid whose boiling point at the pressure of 100 kPa is at most 75 degrees centigrade.

In an energy-storage module according to an exemplifying and non-limiting embodiment of the invention, the first section of the container structure contains liquid whose boiling point at the pressure of 100 kPa is at most 65 degrees centigrade.

In an energy-storage module according to an exemplifying and non-limiting embodiment of the invention, the first section of the container structure contains liquid whose boiling point at the pressure of 100 kPa is at most 55 degrees centigrade.

The liquid can be for example fluorocarbon-based fluid such as e.g. 3M™ Fluorinert™ Electronic Liquid FC-3284 or fluorinated ketone such as e.g. 3M™ Novec™ 1230. The boiling points of FC-3284 and Novec™ 1230 at 100 kPa are about 50 degrees centigrade.

In accordance with the invention, there is provided also a new working machine that can be, for example but not necessarily, a tractor, a bucket charger, a road drag, an excavator, a bulldozer, a stone crusher, or a wood chipping machine. A working machine according to the invention comprises:
- a combustion engine,
- one or more functional elements to be driven with mechanical power, and
- an electromechanical power transmission chain between the combustion engine and the one or more functional elements.

The electromechanical power transmission chain of the working machine comprises at least one energy-storage that comprises one or more energy-storage modules according to the invention.

The above-mentioned one or more functional elements of the working machine may comprise for example a hydraulic pump of a hydraulic system of the working machine, wheels of the working machine, and/or chain tracks of the working machine.

The working machine comprises, advantageously but not necessarily, a liquid cooling system configured to cool both a hydraulic system of the working machine and the electromechanical power transmission chain.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of un-recited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figures 1a and 1b illustrate an energy-storage module according to an exemplifying and non-limiting embodiment of the invention,
figure 2 illustrates an energy-storage module according to another exemplifying and non-limiting embodiment of the invention, and
figure 3 shows a schematic illustration of a working machine according to an exemplifying and non-limiting embodiment of the invention.

### Description of the exemplifying embodiments

The specific examples provided in the description given below should not be construed as limiting the scope and/or the applicability of the appended claims. Lists and groups of examples provided in the description given below are not exhaustive unless otherwise explicitly stated.

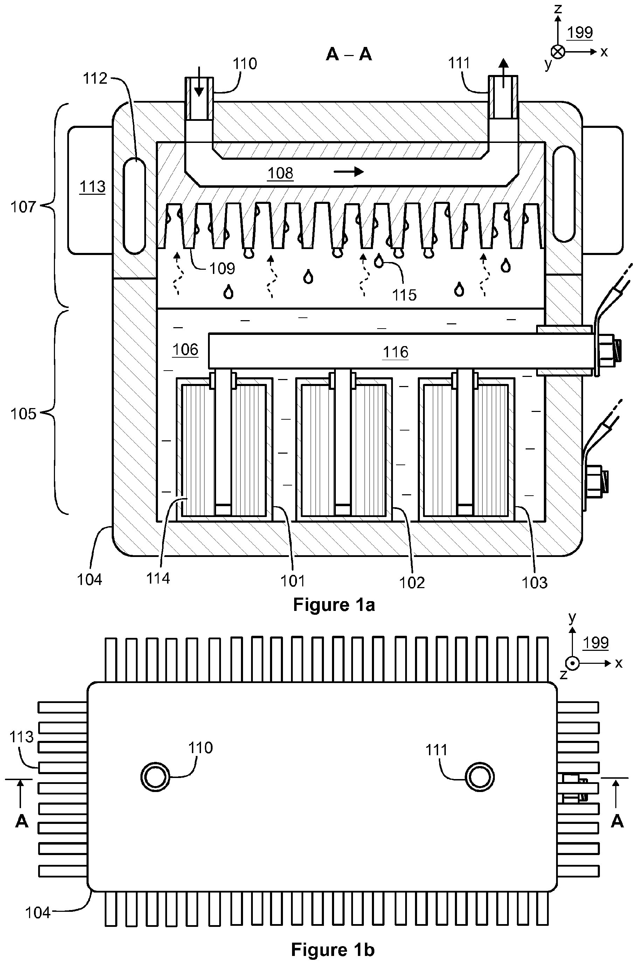

Figures 1a and 1b illustrate an energy-storage module according to an exemplifying and non-limiting embodiment of the invention. Figure 1a shows a view of a section taken along a line A-A shown in figure 1b. The section plane is parallel with the xz-plane of a coordinate system 199. The energy-storage module comprises energy-storage elements 101, 102, and 103 for storing electric energy. In this exemplifying case, the energy-storage module is a capacitor module and each of the energy-storage elements 101-103 comprises an electrode structure for storing electric energy in form of electric charge polarization between electrodes of the electrode structure. In figure 1a, the electrode structure of the energy-storage element 101 is denoted with a reference 114. Each electrode structure may comprise e.g. a first foil, a second foil, and dry dielectric material between the first and second foils. It is also possible that each electrode structure comprises an anode foil, a cathode foil, and porous filler material between the anode and cathode foils so that the filler material is impregnated with liquid electrolyte. In this case, the capacitor module is an electrolytic capacitor. Furthermore, it is also possible that each electrode structure constitutes an electric double-layer capacitor "EDLC" which is often called a "super capacitor".

The energy-storage module comprises a container structure 104 that comprises a first section 105 and a second section 107. As illustrated in figure 1a, the first section 105 of the container structure contains the energy-storage elements 101-103. Furthermore, the first section 105 of the container structure contains liquid 106 whose boiling point at the pressure of 100 kPa is at most 120 degrees centigrade. During operation of the energy-storage module, a portion of the liquid is vaporized by heat generated by the energy-storage elements 101-103. The second section 107 of the container structure is arranged to collect and condense the vaporized liquid and to conduct the condensed liquid back to the first section 105 of the container structure. Thus, the energy-storage elements 101-103 are cooled with two-phase evaporative cooling where the vaporization of the liquid 106 absorbs heat from the energy-storage elements 101-103. The liquid 106 is selected so that its vaporization rate provides a sufficient cooling effect at desired operating temperature of the energy-storage elements 101-103. In figure 1a, the vaporization of the liquid is depicted with wavy dashed line arrows and a droplet of the condensed liquid which is falling from the second section 107 of the container structure back to the first section 105 of the container structure is denoted with a reference 115.

The exemplifying energy-storage module illustrated in figures 1a and 1b comprises cooling ducts for conducting cooling fluid that can be e.g. water. The energy-storage module comprises a first piping interface 110 for receiving the cooling fluid from an external circulation system and a second piping interface 111 for exhausting the cooling fluid back to the external circulation system. The external circulation system is not shown in figures 1a and 1b. The energy-storage module comprises a cooler element 109 inside the second section 107 of the container structure 104. In this exemplifying case, the above-mentioned cooling ducts comprise one or more tubular channels inside the cooler element 109 and tubular channels inside walls of the container structure 104. In figure 1a, a cooling duct inside the cooler element 109 is denoted with a reference 108 and another cooling duct inside a wall of the container structure 104 is denoted with a reference 112.

In the exemplifying energy-storage module illustrated in figures 1a and 1b, an outer surface of the second section 107 of the container structure 104 comprises cooling fins for intensifying heat transfer from the second section of the container structure to the ambient air. In figures 1a and 1b, one of the cooling fins is denoted with a reference 113.

In the exemplifying energy-storage module illustrated in figures 1a and 1b, one electric pole of each energy-storage element is electrically connected to the container structure 104 and the other electric pole of each energy-storage element is electrically connected to a terminal element 116 which is electrically insulated from the container structure 104. Therefore, in this exemplifying case, the energy-storage elements 101-103 are parallel connected and the container structure 104 acts as one electric terminal of the energy-storage module. Different electrical arrangements are however possible too. For example, all electric poles of the energy-storage elements can be electrically insulated from the container structure 104 and the energy-storage elements 103 can be, for example but not necessarily, series connected. It is also possible that there are electric terminals for one or more of the energy-storage elements so that the electrical connections between these energy-storage elements can be made outside the energy-storage module.

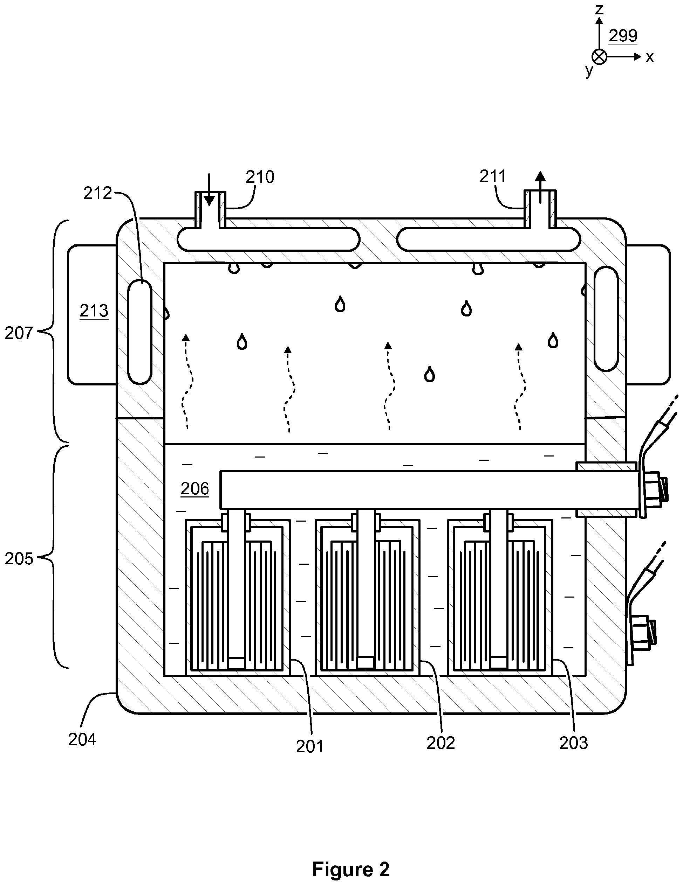

Figure 2 shows a section view of an energy-storage module according to an exemplifying and non-limiting embodiment of the invention. The section plane is parallel with the xz-plane of a coordinate system 299. The energy-storage module comprises energy-storage elements 201, 202, and 203 for storing electric energy. In this exemplifying case, the energy-storage module is a battery module and each of the energy-storage elements 201-203 is a battery element. Each battery element can be for example a lead acid battery element or a lithium-ion battery element.

The energy-storage module comprises a container structure 204 that comprises a first section 205 and a second section 207. As illustrated in figure 2, the first section 205 of the container structure contains the energy-storage elements 201-203. Furthermore, the first section 205 of the container structure contains liquid 206 whose boiling point at the pressure of 100 kPa is at most 120 degrees centigrade. During operation of the energy-storage module, a portion of the liquid is vaporized by heat generated by the energy-storage elements 201-203. The second section 207 of the container structure is arranged to collect and condense the vaporized liquid and to conduct the condensed liquid back to the first section 205 of the container structure.

The exemplifying energy-storage module illustrated in figure 2 comprises cooling ducts for conducting cooling fluid, a first piping interface 210 for receiving the cooling fluid from an external circulation system, and a second piping interface 211 for exhausting the cooling fluid back to the external circulation system. The external circulation system is not shown in figure 2. The cooling fluid can be for example water. In this exemplifying case, the cooling ducts are tubular channels inside walls of the container structure 204. In figure 2, one of the cooling ducts is denoted with a reference 212.

In the exemplifying energy-storage module illustrated in figure 2, an outer surface of the second section 207 of the container structure 204 comprises cooling fins for intensifying heat transfer from the container structure to the ambient air. In figure 2, one of the cooling fins is denoted with a reference 213.

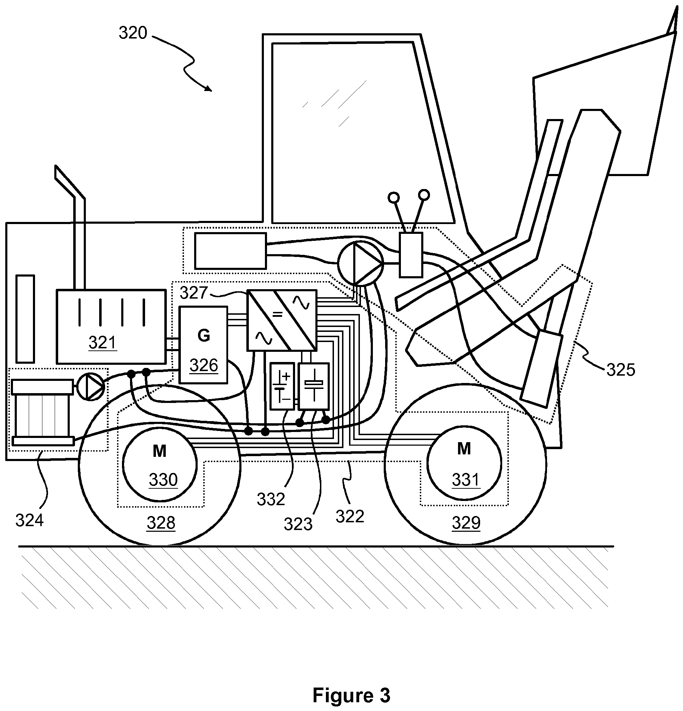

Figure 3 shows a schematic illustration of a working machine 320 according to an exemplifying and non-limiting embodiment of the invention. In this exemplifying case, the working machine is a bucket charger but the working machine could as well be for example a tractor, a road drag, an excavator, a bulldozer, a stone crusher, or a wood chipping machine. The working machine comprises a combustion engine 321 that can be e.g. a diesel engine, an Otto-cycle engine, or a turbine engine. The working machine comprises an electromechanical power transmission chain 322 between the combustion engine 321 and functional elements of the working machine. In this exemplifying case, the functional elements are wheels of the working machine. In figure 3, two of the functional elements i.e. wheels are denoted with reference numbers 328 and 329. The electromechanical power transmission chain comprises a generator 326 the rotor of which is mechanically connected to the shaft of the combustion engine 321. The electromechanical power transmission chain comprises a power electronic converter 327 and electric motors at the hubs of the wheels of the working machine.

In figure 3, two of the electric motors are denoted with reference numbers 330 and 331. The electronic power converter 327 is arranged to convert the electric voltage produced by the generator 326 into electric voltages having amplitudes and frequencies suitable for the electric motors. The electromechanical power transmission chain further comprises an energy-storage 323 that is a capacitive energy-storage and comprises one or more capacitor modules. Each capacitor module comprises one or more capacitor elements for storing electric energy and a container structure whose first section contains the one or more capacitor elements and liquid whose boiling point at the pressure of 100 kPa is at most 120 degrees centigrade. The container structure comprises a second section for condensing a portion of the liquid vaporized by heat generated by the one or more capacitor elements and for conducting the condensed liquid back to the first section.

A working machine according to an exemplifying and non-limiting embodiment of the invention comprises a liquid cooling system 324. In this exemplifying case, each capacitor module of the capacitive energy-storage 323 comprises advantageously one or more cooling ducts connected to the liquid cooling system 324. The liquid cooling system 324 can be arranged to cool also the other parts of the electromechanical power transmission chain 322, and/or a hydraulic system 325 of the working machine, and/or the combustion engine 321. The above-mentioned other parts of the electromechanical power transmission chain 322 comprise e.g. the power electronic converter 327.

A working machine according to an exemplifying and non-limiting embodiment of the invention comprises another energy-storage 332 that comprises one or more battery modules. Each battery module comprises one or more battery elements for storing electric energy and a container structure whose first section contains the one or more battery elements and liquid whose boiling point at the pressure of 100 kPa is at most 120 degrees centigrade. The container structure comprises a second section for condensing a portion of the liquid vaporized by heat generated by the one or more battery elements and for conducting the condensed liquid back to the first section. The energy-storage 332 can be used, together with the capacitive energy-storage 323, for responding to peak power needs exceeding the maximum power of the combustion engine 321. In cases where the working machine 320 comprises a liquid cooling system, the energy-storage 332 is advantageously connected to the liquid cooling system.

The specific examples provided in the description given above should not be construed as limiting the applicability and/or the interpretation of the appended claims. Lists and groups of examples provided in the description given above are not exhaustive unless otherwise explicitly stated.

## Claims

1. An energy-storage module comprising:
- one or more energy-storage elements (101-103, 201-203) for storing electric energy, and
- a container structure (104, 204) comprising a first section (105, 205) containing the one or more energy-storage elements,
wherein: the first section of the container structure contains liquid (106, 206) whose boiling point at a pressure of 100 kPa is at most 120 degrees centigrade, and the container structure comprises a second section (107, 207) for condensing a portion of the liquid vaporized by heat generated by the one or more energy-storage elements and for conducting the condensed liquid back to the first section, and wherein the energy-storage module comprises one or more cooling ducts (108, 112, 212) for conducting cooling fluid, a first piping interface (110, 210) for receiving the cooling fluid from an external system, and a second piping interface (111, 211) for exhausting the cooling fluid back to the external system, the second section (107) comprising means to connect the first and second piping interfaces (110, 111) to the one or more cooling ducts (108), **characterized in that** the energy-storage module comprises a cooler element (109) inside the second section (107) of the container structure and at least one of the one or more cooling ducts is a tubular channel inside the cooler element, the cooler element being a separate piece of material with respect to walls of the container structure.

2. An energy-storage module according to claim 1, wherein at least one of the one or more cooling ducts is a tubular channel (112, 212) inside a wall of the container structure.

3. An energy-storage module according to claim 1 or 2, wherein an outer surface of the second section of the container structure comprises cooling fins (113, 213) for intensifying heat transfer from the container structure to ambient air.

4. An energy-storage module according to any of claims 1-3, wherein the energy-storage module is a capacitor module and each of the one or more energy-storage elements (101-103) comprises an electrode structure (114) for storing electric energy in form of electric charge polarization between electrodes of the electrode structure.

5. A capacitor module according to claims 4, wherein the electrode structure comprises a first foil, a second foil, and dry dielectric material between the first and second foils.

6. A capacitor module according to claim 4, wherein the electrode structure comprises an anode foil, a cathode foil, and porous filler material located between the anode and cathode foils and impregnated with liquid electrolyte.

7. A capacitor module according to claim 4, wherein the electrode structure constitutes an electric double-layer capacitor.

8. An energy-storage module according to any of claims 1-3, wherein the energy-storage module is a battery module and each of the one or more energy-storage elements (201-203) is a battery element.

9. An energy-storage module according to any of claims 1-8, wherein the boiling point of the liquid at the pressure of 100 kPa is at most 75 degrees centigrade.

10. An energy-storage module according to any of claims 1-9, wherein the boiling point of the liquid at the pressure of 100 kPa is at most 65 degrees centigrade.

11. An energy-storage module according to any of claims 1-10, wherein the boiling point of the liquid at the pressure of 100 kPa is at most 55 degrees centigrade.

12. An energy-storage module according to any of claims 1-11, wherein the liquid is one of the following: fluorocarbon-based fluid, fluorinated ketone.

13. A working machine (320) comprising:
- a combustion engine (321),
- one or more functional elements (328, 329) to be driven with mechanical power, and
- an electromechanical power transmission chain (322) between the combustion engine and the one or more functional elements,
wherein the electromechanical power transmission chain comprises at least one energy-storage (323, 332) comprising at least one energy-storage module according to any of claims 1-12.

## Patentansprüche

1. Energiespeichermodul, umfassend:
- ein oder mehrere Energiespeicherelemente (101-103, 201-203) zum Speichern elektrischer Energie und
- eine Behälterstruktur (104, 204), die einen ersten Abschnitt (105, 205) umfasst, der das eine oder die mehreren Energiespeicherelemente enthält,
wobei: der erste Abschnitt der Behälterstruktur Flüssigkeit (106, 206) enthält, deren Siedepunkt bei einem Druck von 100 kPa höchstens 120 Grad Celsius beträgt, und die Behälterstruktur einen zweiten Abschnitt (107, 207) zum Kondensieren eines Teils der Flüssigkeit, der durch Wärme, die durch das eine oder die mehreren Energiespeicherelemente erzeugt wird, verdampft wird, und zum Zurückleiten der kondensierten Flüssigkeit zu dem ersten Abschnitt umfasst und wobei das Energiespeichermodul einen oder mehrere Kühlkanäle (108, 112, 212) zum Leiten von Kühlfluid, eine erste Rohrleitungsschnittstelle (110, 210) zum Empfangen des Kühlfluids von einem externen System und eine zweite Rohrleitungsschnittstelle (111, 211) zum Auslassen des Kühlfluids zurück zu dem externen System umfasst, wobei der zweite Abschnitt (107) Mittel umfasst, um die erste und zweite Rohrleitungsschnittstelle (110, 111) mit dem einen oder den mehreren Kühlkanälen (108) zu verbinden, **dadurch gekennzeichnet, dass** das Energiespeichermodul ein Kühlerelement (109) im Inneren des zweiten Abschnitts (107) der Behälterstruktur umfasst und wenigstens einer des einen oder der mehreren Kühlkanäle ein röhrenförmiger Kanal im Inneren des Kühlerelements ist, wobei das Kühlerelement in Bezug auf Wände der Behälterstruktur ein separates Materialstück ist.

2. Energiespeichermodul nach Anspruch 1, wobei wenigstens einer des einen oder der mehreren Kühlkanäle ein röhrenförmiger Kanal (112, 212) im Inneren einer Wand der Behälterstruktur ist.

3. Energiespeichermodul nach Anspruch 1 oder 2, wobei eine Außenfläche des zweiten Abschnitts der Behälterstruktur Kühlrippen (113, 213) zum Verstärken der Wärmeübertragung von der Behälterstruktur an die Umgebungsluft umfasst.

4. Energiespeichermodul nach einem der Ansprüche 1-3, wobei das Energiespeichermodul ein Kondensatormodul ist und jedes des einen oder der mehreren Energiespeicherelemente (101-103) eine Elektrodenstruktur (114) zum Speichern elektrischer Energie in Form einer elektrischen Ladungspolarisation zwischen Elektroden der Elektrodenstruktur umfasst.

5. Kondensatormodul nach Anspruch 4, wobei die Elektrodenstruktur eine erste Folie, eine zweite Folie und trockenes dielektrisches Material zwischen der ersten und zweiten Folie umfasst.

6. Kondensatormodul nach Anspruch 4, wobei die Elektrodenstruktur eine Anodenfolie, eine Kathodenfolie und poröses Füllstoffmaterial, das sich zwischen der Anoden- und Kathodenfolie befindet und mit flüssigem Elektrolyten getränkt ist, umfasst.

7. Kondensatormodul nach Anspruch 4, wobei die Elektrodenstruktur einen elektrischen Doppelschichtkondensator bildet.

8. Energiespeichermodul nach einem der Ansprüche 1-3, wobei das Energiespeichermodul ein Batteriemodul ist und jedes des einen oder der mehreren Energiespeicherelemente (201-203) ein Batterieelement ist.

9. Energiespeichermodul nach einem der Ansprüche 1-8, wobei der Siedepunkt der Flüssigkeit bei dem Druck von 100 kPa höchstens 75 Grad Celsius beträgt.

10. Energiespeichermodul nach einem der Ansprüche 1-9, wobei der Siedepunkt der Flüssigkeit bei dem Druck von 100 kPa höchstens 65 Grad Celsius beträgt.

11. Energiespeichermodul nach einem der Ansprüche 1-10, wobei der Siedepunkt der Flüssigkeit bei dem Druck von 100 kPa höchstens 55 Grad Celsius beträgt.

12. Energiespeichermodul nach einem der Ansprüche 1-11, wobei die Flüssigkeit eine der folgenden ist: Fluid auf Fluorkohlenwasserstoffbasis, fluoriertes Keton.

13. Arbeitsmaschine (320), umfassend:
- einen Verbrennungsmotor (321),
- ein oder mehrere Funktionselemente (328, 329), die mit mechanischer Kraft anzutreiben sind, und
- eine elektromechanische Kraftübertragungskette (322) zwischen dem Verbrennungsmotor und dem einen oder den mehreren Funktionselementen,
wobei die elektromechanische Kraftübertragungskette wenigstens einen Energiespeicher (323, 332) umfasst, der wenigstens ein Energiespeichermodul nach einem der Ansprüche 1-12 umfasst.

## Revendications

1. Module de stockage d'énergie comprenant :
- un ou plusieurs éléments de stockage d'énergie (101-103, 201-203) pour stocker de l'énergie électrique,
- une structure de conteneur (104, 204) comprenant une première section (105, 205) contenant les un ou plusieurs éléments de stockage d'énergie,
dans lequel : la première section de la structure de conteneur contient du liquide (106, 206) dont le point d'ébullition à une pression de 100 kPa est au plus de 120 degrés centigrades, et la structure de conteneur comprend une seconde section (107, 207) pour condenser une partie du liquide vaporisé par la chaleur générée par les un ou plusieurs éléments de stockage d'énergie et pour renvoyer le liquide condensé vers la première section, et dans lequel le module de stockage d'énergie comprend un ou plusieurs tuyaux de refroidissement (108, 112, 212) pour conduire du fluide de refroidissement, une première interface de tubes (110, 210) pour recevoir le fluide de refroidissement depuis un système externe, et une seconde interface de tubes (111, 211) pour faire sortir et renvoyer le fluide de refroidissement vers le système externe, la seconde section (107) comprenant un moyen pour connecter les première et seconde interfaces de tubes (110, 111) aux un ou plusieurs tuyaux de refroidissement (108), **caractérisé en ce que** le module de stockage d'énergie comprend un élément refroidisseur (109) à l'intérieur de la seconde section (107) de la structure de conteneur et au moins un des un ou plusieurs tuyaux de refroidissement est un canal tubulaire à l'intérieur de l'élément refroidisseur, l'élément refroidisseur étant une pièce de matériau séparée par rapport aux parois de la structure de conteneur.

2. Module de stockage d'énergie selon la revendication 1, dans lequel au moins un des un ou plusieurs tuyaux de refroidissement est un canal tubulaire (112, 212) à l'intérieur d'une paroi de la structure de conteneur.

3. Module de stockage d'énergie selon la revendication 1 ou 2, dans lequel une surface extérieure de la seconde section de la structure de conteneur comprend des ailettes de refroidissement (113, 213) pour intensifier le transfert de chaleur de la structure de conteneur vers l'air ambiant.

4. Module de stockage d'énergie selon l'une quelconque des revendications 1 - 3, dans lequel le module de stockage d'énergie est un module de condensateur et chacun des un ou plusieurs éléments de stockage d'énergie (101-103) comprend une structure d'électrodes (114) pour stocker de l'énergie électrique sous forme de polarisation de charge électrique entre des électrodes de la structure d'électrodes.

5. Module de condensateur selon la revendication 4, dans lequel la structure d'électrodes comprend une première feuille, une seconde feuille et un matériau diélectrique sec entre les première et seconde feuilles.

6. Module de condensateur selon la revendication 4, dans lequel la structure d'électrodes comprend une feuille à l'anode, une feuille à la cathode et un matériau de charge poreux situé entre les feuilles à l'anode et à la cathode et imprégné d'un électrolyte liquide.

7. Module de condensateur selon la revendication 4, dans lequel la structure d'électrodes constitue un condensateur électrique à double couche.

8. Module de stockage d'énergie selon l'une quelconque des revendications 1 - 3, dans lequel le module de stockage d'énergie est un module de batterie et chacun des un ou plusieurs éléments de stockage d'énergie (201-203) est un élément de batterie.

9. Module de stockage d'énergie selon l'une quelconque des revendications 1 - 8, dans lequel le point d'ébullition du liquide à la pression de 100 kPa est au plus de 75 degrés centigrades.

10. Module de stockage d'énergie selon l'une quelconque des revendications 1 - 9, dans lequel le point d'ébullition du liquide à la pression de 100 kPa est au plus de 65 degrés centigrades.

11. Module de stockage d'énergie selon l'une quelconque des revendications 1 - 10, dans lequel le point d'ébullition du liquide à la pression de 100 kPa est au plus de 55 degrés centigrades.

12. Module de stockage d'énergie selon l'une quelconque des revendications 1 - 11, dans lequel le liquide est l'un des suivants : fluide à base de fluoro-carbone, cétone fluoré.

13. Machine-outil (320) comprenant :
- un moteur à combustion (321),
- un ou plusieurs éléments fonctionnels (328, 329) destinés à être entraînés avec de la puissance mécanique, et
- une chaîne de transmission de puissance électromécanique (322) entre le moteur à combustion et les un ou plusieurs éléments fonctionnels,
dans lequel la chaîne de transmission de puissance électromécanique comprend au moins un stockage d'énergie (323, 332) comprenant au moins un module de stockage d'énergie selon l'une quelconque des revendications 1 - 12.
